# EUROPEAN PATENT APPLICATION

(11) **EP 1 347 009 A1**
(43) Date of publication of application: **24.09.2003**
(21) Application number: 03251265.9
(22) Date of filing: 03.03.2003
(51) Int. Cl.: C08K 3/04, F16C 33/20

(54) **A low friction sleeve bearing**

(30) Priority: 01.03.2002 JP 2002055307; 01.03.2002 JP 2002055308; 07.03.2002 JP 2002062412; 07.03.2002 JP 2002062406; 17.06.2002 JP 2002176436; 18.09.2002 JP 2002272147
(71) Applicant: Minebea Co. Ltd., Kitasaku-gun, Nagano 389-0293 (JP)
(72) Inventor: Hokkirigawa, Kazuo, Yonezawa City, Yamagata Prefecture (JP); Akiyama, Motoji, Oaza, Miyota-machi, Kitasaku-gun (JP); Akiyama, Meiten, Oaza, Miyota-machi, Kitasaku-gun (JP); Kawamura, Morinobu c/o Mineba Co., Ltd, Kitasaku-gun, Nagano-ken 389-0293 (JP); Akiyama, Motoharu c/o Mineba Co., Ltd, Kitasaku-gun, Nagano-ken 389-0293 (JP)
(74) Representative: Wilson Gunn Gee

(57) **Abstract**

A sleeve bearing for use in water, the sleeve bearing having a shaft and a sleeve. The sleeve or the shaft is made of a synthetic resin composition obtained by uniformly dispersing fine powder of RBC or CRBC in a resin. The sleeve bearing having a low coefficient of friction in water.

## Description

### BACKGROUND OF THE INVENTION

### Field Of The Invention

This application claims priority based on the following Japanese patent applications: 2002-055307, filed March 1, 2002; 2002-055308, filed March 1, 2002; 2002-062412, filed March 7, 2002; 2002-062406, filed March 7, 2002; -2002-176436, filed June 17, 2002; and 2002-272147, filed September 18, 2002.

The present invention relates to a sleeve bearing for use in water that has a low coefficient of friction in water. More particularly the present invention relates to a sleeve bearing for use in water which utilizes a synthetic resin composition obtained by mixing RBC or CRBC in a form of fine powder of an average particle diameter of 300µm or less and a resin.

### Description Of The Related Art

A conventional sleeve bearing for use in water is made from metal and is provided with a shield to prevent water from getting into the sleeve bearing. Some conventional sleeve bearings are made using commercially available PPS resin made by Idemitsu Sekiyu Kagaku K., K. Co., Ltd. These conventional bearings do not provide satisfactory wear characteristics. It is an object of this invention to provide a sleeve bearing with improved wear characteristics that does not require a shield when used in fluid, for example, when used in a mixture of water and ethylene glycol.

The objects are achieved by using rice bran - an environmentally friendly ubiquitous raw material. Every year, the total production of rice bran in the world is approximately thirty three million tons of which Japan produces about 900,000 tons The present invention uses a material made by improving upon a materials described in an article by Mr. Kazuo Horikirigawa (Kinou Zairyou (Functional Materials), May 1997 issue, Vol. 17, No. 5, pp 24 to 28). Mr. Kazuo Horikirigawa's article discloses a porous carbon material made by using rice bran and called "RB ceramic" (hereinafter referred to as "RBC"). RBC is a carbon material obtained by mixing and kneading defatted rice bran and a thermosetting resin, and then by molding the mixture and sintering it in an inert gas atmosphere after drying the compact. Any thermosetting resin including a phenol resin, a diaryl phthalate resin, an unsaturated polyester resin, an epoxy resin, a polyamide resin, or a triazine resin may be used. Phenol resin is the preferred material. The mixing ratio between defatted rice bran and the thermosetting resin is 50 to 90 : 50 to 10 by mass, 75 : 25 being the preferred ratio. Sintering is done at 700° C to 1000° C for about 40 minutes to 120 minutes using, for example, a rotary kiln.

CRB ceramic (hereinafter referred to as "CRBC") is a black colored porous ceramic obtained by further improving RBC as follows: after mixing and kneading defatted rice bran obtained from rice bran and a thermosetting resin, and then preliminarily sintering the mixture at a temperature of 700 ° C to 1000 ° C in an inert gas atmosphere, it is pulverized to about 100 mesh or less, thereby preparing carbonized powder. Next, the carbonized powder and a thermosetting resin are mixed and kneaded, and after molding it under pressure of 20 Mpa to 30 Mpa, the compact is again heat treated at a temperature of 500° C to 1100° C in an inert gas atmosphere to obtain CRBC.
RBC and CRBC have the following excellent characteristics:
High hardness.
The surface of each particle is irregular.
Extremely small coefficient of thermal expansion.
The textural constitution is porous,
Conducts electricity.
The specific gravity is low and it is light in weight.
Extremely small coefficient of friction.
Excellent anti - wearing property.
As the raw material is rice bran, its adverse effects on the earth's environment are minor, and it leads to the resource saving.

### SUMMARY OF THE INVENTION

The shortcomings of the prior art are overcome by using a synthetic resin composition obtained by mixing the RBC or CRBC in form of a fine powder of an average particle diameter of 300 µm or less, preferably 10 to 100 µm, more preferably 10 to 50 µm, and a resin. The synthetic resin composition displays specific desirable sliding motion characteristics. In particular a synthetic resin composition obtained by uniformly dispersing a fine powder of RBC or CRBC, especially at a ratio by mass of fine powder of RBC or CRBC : resin, of 30 to 90 : 70 to 10 displays surprisingly good wear characteristics with a anti-rust property in water, alcohol, ethylene glycol and a mixture thereof.

The typical process for the production of the synthetic resin composition for making the sleeve bearing for use in fluid includes kneading with a resin the fine powder of RBC or CRBC at a temperature in the neighborhood of the melting point of the synthetic resin, and thereby uniformly dispersing the fine powder of RBC or CRBC in the resin. RBC and CRBC can also be made from materials other than rice bran that can be a source of carbon. One example of such material is bran of another grain such as oat. Hence, as used herein, the terms RBC and CRBC are not limited to materials made from rice bran.

Further features and advantages will appear more clearly on a reading of the detailed description, which is given below by way of example only and with reference to the accompanying drawings wherein corresponding reference characters on different drawings indicate corresponding parts.

### BRIEF DESCRIPTION OF THE DRAWING

Fig. 1 is a schematic drawing of a sleeve bearing.
Fig. 2 is an application example of the sleeve bearing.
Fig. 3 is one example of a shaft of a sleeve bearing.
Fig. 4 is one example of a sleeve bearing in which a spiral groove is provided on the shaft thereof.

### DETAILED DESCRIPTION

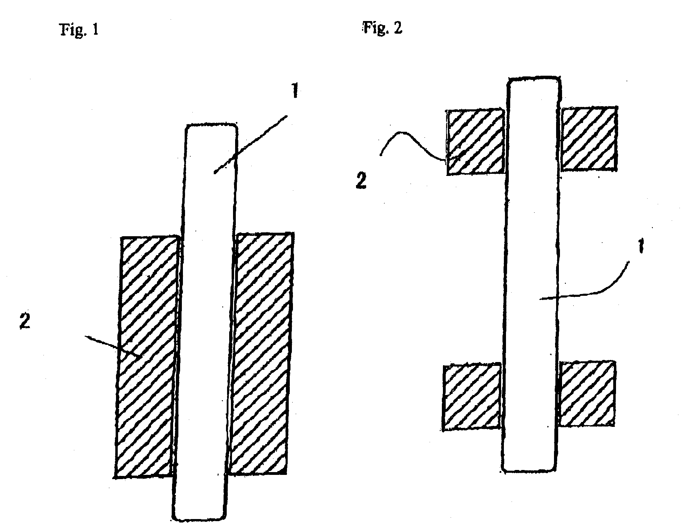

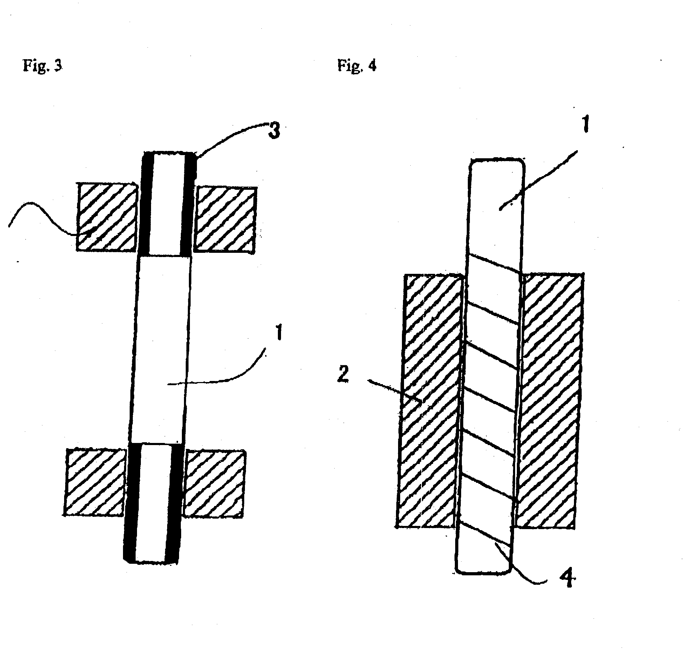

Fig. 1 shows a sleeve bearing. The sleeve bearing consists of a shaft 1 and a sleeve 2. A synthetic resin composition obtained by uniformly dispersing fine powder of RBC or CRBC in a resin is molded, to make shaft 1 or sleeve 2. Generally, shaft 1 is made of an alloy of a stainless steel family. If a hard shaft 1 is required, quenching is carried out. As shown in Fig. 3, if necessary, it is permissible to press a hard anti- rusting alloy 3 in portion of shaft 1. Non limiting examples of steel series metal that may be used for making shaft 1 or sleeve 2 are stainless steel type alloy of iron, nickel, chrome, and molybdenum. Any alloy, as long as it is hard and difficult to rust, can be used. Furthermore, it is also permissible to make a shaft with the above - mentioned synthetic resin composition.

The RBC or CRBC used has an average particle diameter of 300 µm or less. Average particle diameter of 10 to 100 µm, more preferably 10 to 50 µm, allows a surface condition of a good frictional coefficient to be formed, and is appropriate as a material for a sleeve bearing for sliding motion in water.

Resins such as, for example, polyamide, polyester, and poly olefin can be used with RBC or CRBC to obtain the synthetic resin composition. Thermoplastic resins such as nylon 66 (poly hexa- methylene adipamide), nylon 6 (poly capramide), nylon 11 (poly undecane amide), nylon 12, poly acetal, poly butylenes terephthalate, poly ethylene terephthalate, polypropylene, poly ethylene, and poly phenylene sulfide can also be used with RBC or CRBC to obtain the synthetic resin composition, nylon 66 being preferred. These thermoplastic resins can be used alone or a mixture of two or more may be used. Thermosetting resin alone or in combination with other resins can be used with RBC or CRBC to obtain the synthetic resin composition. Nonlimiting examples of such thermosetting resins are phenolc resin, diaryl phthalate resin, an unsaturated polyester resin, an epoxy resin, a polyamide resin, or a triazine resin. RBC can also be made from materials other than rice bran that can be source of carbon. One example of such material is bran of another grain such as oat. The ratio by mass of fine powder of RBC or CRBC to resin is 30 to 90 : 70 to 10. If the amount of a resin or a combination of resins exceeds 70 % by mass, the low frictional characteristics can not be achieved, on the other hand, if a resin or a combination of resins is 10 % by mass or less, the molding becomes difficult.

The molding is in general done by extrusion molding or injection molding. The preferred temperature of the mold die is on a slightly lower side between the glass transition point and the melting point of the resin. Furthermore, good frictional property can be obtained by gradual cooling of the mold die.

The following examples explain the details of the present invention.

### Example 1

### Manufacturing Example of RBC fine powder

750 grams of defatted rice bran and 250 grains of a phenol resin in liquid form (Resol) were mixed and kneaded while heating them at a temperature of 50 °C to 60°C. A uniform mixture having plasticity was obtained. The mixture was baked for 100 minutes at a temperature of 900 °C in a nitrogen atmosphere in a rotary kiln, and the carbonated baked product thus obtained was pulverized in a pulverizing machine, followed by sieving with a sieve of 150 mesh, and thus fine powder of RBC having an average particle diameter of 140 to 160 µm was obtained.

### Example of Preparation 1 of a composition of RBC fine powder and a resin

While heating at a temperature of 240 °C to 290 °C, 500 grams of the RBC fine powder thus obtained and 500 grams of nylon 66 powder were mixed and kneaded. Thus a uniform plastic mixture having 50 % by mass of the RBC fine powder was obtained.

### Preparation of a sleeve bearing

The synthetic resin composition obtained by melting and mixing the RBC fine powder and nylon 66 was injection molded, thereby preparing a sleeve of 22 mm in outer diameter, 8 mm in inner diameter, and 120 mm in length. A shaft of 7.95 mm in outer diameter and 200 mm in length made of SUS 303 stainless alloy was inserted into the molded sleeve, preparing a sleeve bearing as shown in Fig. 1.

### Example 2

By using the method described in Example 1, RBC fine powder of an average particle diameter of 140 to 160 µm was obtained.

### Example of Preparation 2 of a composition of RBC fine powder and a resin

While heating at a temperature of 240 °C to 290 °C, 700 grams of the RBC fine powder thus obtained and 300 grams of nylon 66 powder were mixed and kneaded. Thus a uniform plastic mixture having 70 % by mass of the RBC fine powder was obtained.

### Preparation of a sleeve bearing

The synthetic resin composition obtained by melting and mixing the RBC fine powder and nylon 66 was injection molded, thereby preparing a sleeve of 22 mm in outer diameter, 8 mm in inner diameter, and 20 mm in length. A shaft of 7.95 mm in outer diameter and 200 mm in length made of SUS 304 stainless alloy was inserted into the molded sleeve, preparing a sleeve bearing as shown in Fig. 2.

### Example 3

### Manufacturing Example 3 of RBC fine powder

750 grams of defatted rice bran and 250 grams of a phenol resin in a liquid form (Resol) were mixed and kneaded while heating them at a temperature of 50 °C to 60 °C. A uniform mixture having plasticity was obtained. The mixture was baked for 100 minutes at a temperature of 1000 °C in a nitrogen atmosphere in a rotary kiln, and the carbonated baked product thus obtained was pulverized in a pulverizing machine, followed by sieving with a sieve of 400 mesh, and thus fine powder of RBC having an average particle diameter of 40 to 50 µm was obtained.

### Example of Preparation 3 of a composition of RBC fine powder and a resin

While heating at a temperature of 240 °C to 290 °C, 700 grams of the RBC fine powder thus obtained and 300 grams of nylon 66 powder were mixed and kneaded, Thus a uniform plastic mixture having 70 % by mass of the RBC fine powder was obtained.

### Preparation of a sleeve bearing

The synthetic resin composition obtained by melting and mixing the RBC fine powder and nylon 66 was injection molded, thereby preparing a sleeve of 22 mm in outer diameter, 8 mm in inner diameter, and 120 mm in length. A shaft of 7.95 mm in outer diameter and 200 mm in length made of SUS bearing steel was inserted into the molded sleeve, preparing a sleeve bearing as shown in Fig. 1.

### Example 4

### Manufacturing Example of CRBC fine powder

750 grams of defatted rice bran and 250 grams of a phenol resin in a liquid form (Resol) were mixed and kneaded while heating them at a temperature of 50 °C to 60 °C. A uniform mixture having plasticity was obtained. The mixture was baked for 60 minutes at a temperature of 900 °C in a nitrogen atmosphere in a rotary kiln. And the carbonated baked product thus obtained was pulverized in a pulverizing machine, followed by sieving with a sieve of 200 mesh, and thus fine powder of RBC having an average particle diameter of 100 to 120 µm was obtained.

While heating at a temperature of 100 °C to 150 °C, 750 grams of the RBC fine powder thus obtained and 500 grams of a phenol resin in a solid form (Resol) were mixed and kneaded. Thus a uniform mixture having plasticity was obtained. Then, the plastic material was molded under pressure into a sphere of about 1 cm in diameter under a pressure of 22 Mpa. The temperature of the mold die was 150 °C. The molded product was taken out from the mold die and placed in a kiln, the temperature of the molded product was raised to 500 °C in a nitrogen atmosphere at a rate of 1 °C per minute, and it was kept at 500 °C for 60 minutes, and then sintered at 900 °C for about 120 minutes. Then, the temperature was lowered to 500 °C at a rate of 2 to 3 °C per minute, and after reaching 500 °C or lower, it was cooled naturally while leaving it undisturbed. The CRBC molded product thus obtained was pulverized in a pulverizing machine, followed by sieving with a sieve of 500 mesh to obtain CRBC fine powder having an average particle diameter of 20 to 30 µm.

### Example of Preparation of a composition of CRBC fine powder and a resin

While heating at a temperature of 240 OC to 290 OC, 500 grams of the CRBC fine powder thus obtained and 500 grams of nylon 66 powder they were mixed and kneaded. Thus a uniform plastic mixture having 50 % by mass of the CRBC fine powder was obtained.

### Preparation of a sleeve bearing

The synthetic resin composition obtained by melting and mixing the CRBC fine powder and nylon 66 was injection molded into a sleeve of 22 mm in outer diameter, 8 mm in inner diameter, and 20 mm in length. A 200 mm long shaft is made by pressing two cylindrical members of 7.95 mm in outer diameter, 5.00 in inner diameter and 20 mm in length and made of SUS 304 stainless alloy into both ends of the shaft. The shaft was inserted into the molded sleeves, preparing a sleeve bearing as shown in Fig. 3.

The compositions of RBC or CRBC and resins used in Example 5 through Example 9 were prepared by using the same RBC or CRBC fine powder as produced in Example 1 through Example 4 and by dispersing the fine powder of the RBC or the CRBC in synthetic resins under the conditions as indicated in Table 1. In addition, for the sake of comparison, commercially available PPS resin for pumps used in water (made by Idemitsu Sekiyu Kagaku K., K. Co., Ltd.) was used.

**Table 1**

| | Composition 5 | Composition 6 | Composition 7 | Composition 8 | Composition 9 | Ex. For comp. |
|---|---|---|---|---|---|---|
| Types of RBC and CRBC fine powder | One used in Ex. 4 | One used in Ex. 3 | One used in Ex. 1 | One used in Ex. 2 | One used in Ex. 2 | |
| Synthetic | Nylon 66 | PBT. | PP | PPS | Nylon 66 | PPS |
| resin | | | | | | |
| Fine powder: resin (ratio by mass) | 70 : 30 | 50 : 50 | 70 : 30 | 50 : 50 | 30 : 70 | |
| PBT : poly butylenes terephthalate PP : poly propylene PPS : poly phenylene sulfide | | | | | | |

The characteristics of the synthetic resin compositions of the RBC or CRBC fine power and resins, and the PPS resin used in the sleeve bearing for use in water of Example 1 through Example 9 are summarized in Table 2.

**Table 2**

| | Tensile strength (MPa) | Bending strength (MPa) | Bending elasticity (GPa) | Resistivity (ohm cm) | Specific gravity |
|---|---|---|---|---|---|
| Composition of Ex. 1 | 64.6 | 98.6 | 6.12 | 4.9 E + 01 | 1.35 |
| Composition of Ex. 2 | 61.4 | 97.6 | 6.14 | 3.2 E + 01 | 1.38 |
| Composition of Ex. 3 | 76.5 | 120 | 8.85 | 2.1 E + 01 | 1.43 |
| Composition of Ex. 4 | 75.9 | 117 | 8.56 | 3.4 E + 01 | 1.38 |
| Composition of Ex. 5 | 58.2 | 105 | 4.12 | 3.3 E + 01 | 1.27 |
| Composition of Ex. 6 | 49.6 | 72.3 | 7.5 | 3.3 E + 01 | 1.46 |
| Composition of Ex. 7 | 22.7 | 44.3 | 6.5 | 3.8 E + 01 | 1.32 |
| Composition of Ex. 8 | 79.2 | 121 | 7.6 | 4.0 E + 01 | 1.48 |
| Composition of Ex. 9 | 57.3 | 101 | 4.3 | 2.7 E + 01 | 1.24 |
| PPS in Ex. For compar. | 159 | 235 | 14.1 | 1.0 E + 16 | 1.75 |

### Example 5

The synthetic resin composition 5 listed in Table 1 was injection molded, thereby preparing a sleeve of 22 mm in outer diameter, 8 mm in inner diameter, 120 mm in length and having a spiral groove of 0.1 mm in depth on the inner side. A shaft of 7.95 mm in outer diameter and 200 mm in length made of SUS bearing steel was inserted into the molded sleeves, preparing a sleeve bearing shown in Fig. 1.

### Example 6

The synthetic resin composition 6 listed in Table 1 was injection molded, thereby preparing a shaft of 7.95 mm in outer diameter, and 200 mm in length. Sleeves 22 mm in outer diameter, 8 mm in inner diameter, and 120 mm in length were made from SUS bearing steel. The sleeve was inserted on the shaft to form a sleeve bearing as shown in Fig. 1.

### Example 7

The synthetic resin composition 7 listed in Table I was injection molded, thereby preparing a shaft of 7.95 mm in outer diameter, and 200 mm in length having a spiral groove of 0.1 mm in depth. Sleeves 22 mm in outer diameter, 8 mm in inner diameter and 120 mm in length were made from SUS bearing steel. The sleeve was inserted on the shaft to form a sleeve bearing as shown in Fig. 4.

### Example 8

The synthetic resin composition 8 listed in Table 1 was injection molded, thereby preparing sleeves of 22 mm in outer diameter, 8 mm in inner diameter, and 20 mm in length. A shaft of 7.95 mm in outer diameter and 200 mm in length made of SUS bearing steel having a spiral groove of 0.1 mm in depth was inserted into the sleeve, preparing a sleeve bearing as shown in Fig. 4.

### Example 9

The synthetic resin composition 9 listed in Table I was injection molded, thereby preparing a shaft of 7.95 mm in outer diameter, and 200 mm in length having a spiral groove of 0.1 mm in depth. A sleeve 22 mm in outer diameter, 8 mm in inner diameter and 120 mm in length was made from SUS bearing steel. The sleeve was inserted on the shaft to form a sleeve bearing as shown in Fig. 4.

### Example for Comparison

The commercially available PPS resin for pumps for use with water (made by Idemitsu Sekiyu Kagaku K., K., Co., Ltd.) was injection molded, thereby preparing a sleeve of 22 mm in outer diameter, 8 mm in inner diameter, and 120 mm in. length. A shaft of 7.95 mm in outer diameter and 200 mm in length made of SUS 303 stainless alloy was inserted into the sleeve, preparing a sleeve bearing as shown in Fig. 1.

The frictional characteristics in water of the sleeve bearings for sliding motion in water obtained in Example 1 through Example 9 and in Example for Comparison are summarized in Table 3.

**Table 3**

| | Ex. 1 | Ex. 2 | Ex. 3 | Ex. 4 | Ex. 5 | Ex. 6 | Ex. 7 | Ex. 8 | Ex. 9 | Ex. For compar |
|---|---|---|---|---|---|---|---|---|---|---|
| Shape of bearing | Fig. 1 | Fig. 2 | Fig. 1 | Fig. 3 | Sleeve spiral | Fig. I | Fig. 4 | Fig. 4 | Fig. 4 | Fig. 1 |
| Frictional coeff. µ A | 0.212 | 0.198 | 0.259 | 0.221 | 0.231 | 0.288 | 0.232 | 0.288 | 0.268 | 0.406 |
| Frictional coeff. µ B | 0.182 | 0.212 | 0.234 | 0.209 | 0.239 | 0.268 | 0.195 | 0.259 | 0.252 | 0.413 |
| Frictional coeff. µ C | 0.194 | 0.195 | 0.238 | 0.184 | 0.228 | 0.268 | 0.188 | 0.213 | 0.244 | 0.388 |
| Frictional coeff. µ D | 0.138 | 0.167 | 0.211 | 0.177 | 0.172 | 0.229 | 0.162 | 0.198 | 0.212 | 0.259 |
| Frictional coeff. µ E | 0.156 | 0.182 | 0.204 | 0.195 | 0.172 | 0.213 | 0.159 | 0.156 | 0.218 | 0.213 |
| Frictional coeff. µ F | 0.148 | 0.153 | 0.204 | 0.152 | 0.153 | 0.187 | 0.168 | 0.177 | 0.196 | 0.248 |
| A. measured under the condition of a sliding speed of 0.001 m / sec B. measured under the condition of a sliding speed of 0.005 m / sec C. measured under the condition of a sliding speed of 0.01 m / sec D. measured under the condition of a sliding speed of 0.1 m / sec E. measured under the condition of a sliding speed of 0.5 m / sec F. measured under the condition of a sliding speed of 1 m / sec | | | | | | | | | | |

As can be clearly seen from the results given in Table 3, the sleeve bearings made of the synthetic resin compositions of fine powder of RBC and CRBC and the resins have markedly excellent frictional characteristics in water. These bearings can come into direct contact with a liquid and do not have to be shielded from the liquid.

While a preferred embodiment of the invention has been described, various modifications will be apparent to one skilled in the art in light of this disclosure and are intended to fall within the scope of the appended claims.

## Claims

1. A sleeve bearing for use in water comprising:
a shaft; and
a sleeve, wherein at least a portion of the sleeve or the shaft is made of a synthetic resin composition obtained by uniformly dispersing a powder of RBC or CRBC in a resin.

2. The sleeve bearing of Claim 1 further comprising:
grooves of a spiral form made on the inner face of the sleeve or external surface of the shaft.

3. The sleeve bearing of Claim 1, wherein the synthetic resin composition has a ratio by mass of the powder of RBC or CRBC to the resin of 30 to 90 : 70 to 10.

4. The sleeve bearing of Claim 3, wherein the resin is made of one or more members of a group consisting of nylon 66, nylon 6, nylon 11, nylon 12, poly acetal, poly butylenes terephthalate, poly ethylene terephthalate, poly propylene, poly ethylene, and poly phenylene sulfide.

5. The sleeve bearing of Claim 4, wherein the average particle diameter of the powder of RBC or CRBC is 300 µm or less.

6. The sleeve bearing of Claim 5, wherein the average particle diameter of the powder of RBC or CRBC is 10 to 50 µm.

7. The sleeve bearing of Claim 1 wherein the shaft is made of rust - resistant steel series metal

8. The sleeve-bearing of Claim 1, wherein the shaft is made of the synthetic resin composition having a ratio by mass of the powder of RBC or CRBC to the resin of 30 to 90: 70 to 10.
